# EUROPÄISCHE PATENTSCHRIFT

(11) **EP 0 458 803 B1**
(45) Veröffentlichungstag und Bekanntmachung des Hinweises auf die Patenterteilung: **18.05.1994**
(21) Anmeldenummer: 90902160.2
(22) Anmeldetag: 02.02.1990
(51) Int. Cl.: G06F 11/00, H04L 1/00

(54) **VERFAHREN ZUM BETRIEB EINES SIGNALTECHNISCH SICHEREN MEHRRECHNERSYSTEMES**
PROCESS FOR OPERATING A MULTICOMPUTER SYSTEM CHARACTERIZED BY RELIABLE SIGNAL QUALITY
PROCEDE D'EXPLOITATION D'UN SYSTEME MULTICALCULATEUR CARACTERISE PAR UNE QUALITE DE SIGNAL FIABLE

(30) Priorität: 16.02.1989 DE 3904748
(43) Veröffentlichungstag der Anmeldung: 04.12.1991
(73) Patentinhaber: SIEMENS AKTIENGESELLSCHAFT, 80333 München (DE)
(72) Erfinder: GEDUHN, Norbert, D-3162 Uetze (DE); SCHMIDT-KANEFENDT, Hans-Heinrich, D-3387 Vienenburg 3 (DE)
(86) Internationale Anmeldenummer: DE9000073
(87) Internationale Veröffentlichungsnummer: WO9009633

(56) Entgegenhaltungen:
- EP-A- 0 059 789
- DE-A- 3 442 418

## Beschreibung

Die Erfindung bezieht sich auf ein Verfahren nach dem Oberbegriff des Patentanspruches 1. Ein derartiges Verfahren ist aus der DE-OS 34 42 418 bekannt.

Dort verkehren die Rechner eines Mehrrechnersystemes solange zweikanalig miteinander, bis eine Störung auf einem der Kanäle die weitere zweikanalige Übertragung unmöglich macht. Diese Störung kann sich dabei auf die Übertragungsstrecke selbst oder auf die Ein/Ausgabebaugruppen eines Rechners beziehen. Nach dem Auftreten einer Störung wird der Datenverkehr mindestens zwischen den durch die Störung direkt betroffenen Rechnern für eine maximale Zeitspanne einkanalig mittels höherredundant gesicherter Daten abgewickelt. Die maximale Zeitspanne für die Zulässigkeit des einkanaligen Betriebes ist abhängig von der Fehleroffenbarungszeit von Einzelfehlern der betroffenen Rechner.

Durch eine Störung sind mindestens immer zwei Rechner des Rechnersystems direkt betroffen, nämlich der jeweilige Sende- und der jeweilige Empfangsrechner. Dabei liegt die eigentliche Störung, geht man von einer defekten Ein/Ausgabebaugruppe aus, tatsächlich nur bei einem einzigen Rechner. Alle übrigen Rechner des Mehrrechnersystemes werden beim Austausch von Daten mit dem tatsächlich gestörten Rechner ebenfalls feststellen, daß eine ordnungsgerechte zweikanalige Datenübertragung mit diesem Rechner nicht möglich ist. Auch sie gehen dann nach und nach auf einkanalige höherredundant gesicherte Datenübertragung über. Diese höherredundant gesicherte Datenübertragung ist nur für eine begrenzte Zeitspanne zulässig, innerhalb der die Störungsursache erkannt und beseitigt werden muß. Anderenfalls erfolgt die Sicherheitsabschaltung der einkanalig kommunizierenden Rechner und für den Fall, daß der tatsächlich gestörte Rechner mit allen übrigen Rechnern des Rechnersystemes Daten auszutauschen hat, nach und nach die Abschaltung des gesamten Rechnersystemes. Von Nachteil ist auch, daß jede weitere Störung bei einkanaligem Betrieb mittels höherredundant gesicherter Daten die bleibende Abschaltung des Datenverkehrs zur Folge hat.

Aufgabe der Erfindung ist es, ein Verfahren nach dem Oberbegriff des Patentanspruches 1 anzugeben, das es ermöglicht, die Sicherheitsabschaltung nur für den tatsächlich gestörten Rechner herbeizuführen und das es ferner allen noch am Datenverkehr beteiligten Rechnern ermöglicht, vom einkanaligen Betrieb mittels höherredundant gesicherter Daten wieder in den zweikanaligen Betrieb mit nicht höherredundant gesicherten Daten zu wechseln wenn die Gründe, die zum Einleiten des einkanaligen Betriebes geführt haben, nicht mehr gegeben sind.

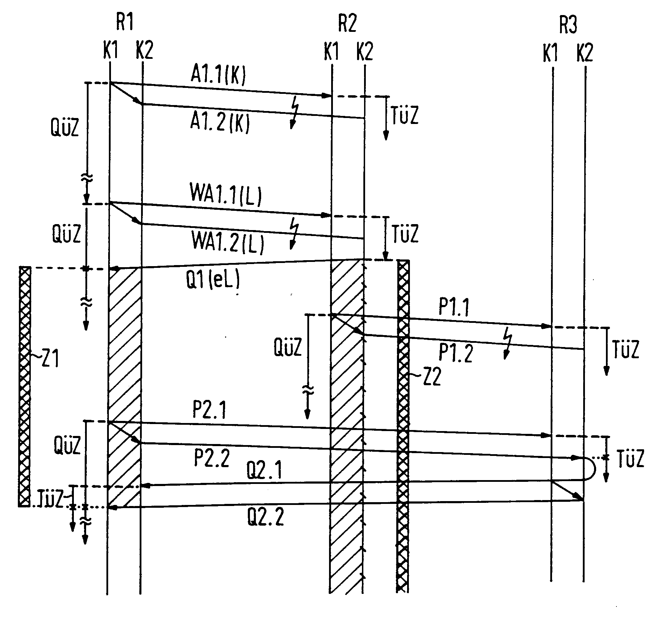

Die Erfindung löst diese Aufgabe durch die kennzeichnenden Merkmale des Patentanspruches 1; sie ist nachstehend anhand eines in der Zeichnung dargestellten Diagrammes für den Ablauf des Datenverkehrs zwischen drei Rechnern erläutert.

Es ist angenommen, daß drei Rechner R1 bis R3 über ein aus den Kanälen K1 und K2 bestehendes Bussystem miteinander kommunizieren. Die zu übertragenden Daten werden als inhaltsgleiche Datentelegramme paarweise vom jeweiligen Sende- an den jeweiligen Empfangsrechner übertragen, wobei die Darstellung der beiden Datentelegramme durchaus verschieden voneinander sein kann. In der Zeichnung ist angenommen, daß der Rechner R1 inhaltsgleiche Datentelegramme A1.1(K) und A1.2(K) (K=Kurztelegramm) an den Rechner R2 zu übermitteln hat. Durch eine Störung auf dem Kanal K2 empfängt der Rechner R2 entweder überhaupt kein Telegramm oder ein Telegramm, dessen Inhalt verschieden ist von dem auf dem Kanal K 1 übertragenen Datentelegramm und dessen Inhalt den vorgegebenen Redundanzbedingungen nicht genügt. Mit Ablauf einer beim Eintreffen des als ordnungsgerecht erkannten ersten Datentelegrammes A1.1(K) auf dem Kanal K1 gestarteten Telegrammüberwachungszeit TÜZ verwirft der Rechner R2 das auf dem Kanal K1 empfangene Datentelegramm, weil mit dem Empfang eines zweiten inhaltsgleichen Telegrammes nach Ablauf der Telegrammüberwachungszeit TÜZ nicht mehr zu rechnen ist.

Mit dem Ausgeben des ersten Datentelegrammes an den Rechner R2 war im Rechner R1 eine Quittungszeitüberwachung QÜZ veranlaßt worden, innerhalb der bei ordnungsgerechtem Empfang der Datentelegramme durch den Rechner R2 mit dem Eintreffen von durch diesen Rechner veranlaßten Quittungsmeldungen zu rechnen ist. In der Zeichnung ist die Quittungszeitüberwachung durch die zugehörige Quittungsüberwachungszeit verdeutlicht. Nach Ablauf der Quittungsüberwachungszeit QÜZ veranlaßt der Rechner die zweikanalige Wiederholung der zuvor ausgegebenen Daten in höherredundant gesicherter Form, beispielsweise mittels zweier identischer oder invertiert dargestellter Datentelegramme WA 1.1(L), WA 1.2 (L) (L=Langtelegramm). Im angenommenen Beispiel soll das auf dem Kanal K1 übertragene Datentelegramm WA1.1(L) vom Rechner R2 wiederum ordnungsgerecht empfangen werden, während der Empfang des auf dem anderen Kanal übertragenen Datentelegrammes WA1.2(L) wiederum gestört ist. Mit dem Ablauf der Telegrammüberwachungszeit TÜZ übernimmt der Rechner R2 das ihm über den Kanal K1 übermittelte höherredundant gesicherte Datentelegramm, sofern dieses, wie im Beispiel angenommen, auf dem gleichen Kanal empfangen wurde wie das zuvor übermittelte nicht höherredundant gesicherte Datentelegramm und den vorgegebenen Reundanzbedingungen genügt.

Die Übernahme des Datentelegrammes durch den Rechner R2 wird dem Rechner R1 durch eine Quittungsmeldung Q1(eL) mitgeteilt. Die der Quittungsmeldung beigegebene Kennung (eL) unterrichtet den Rechner R1 davon, daß es sich um eine einkanalige höherredundant gesicherte Quittung handelt. Der ordnungsgerechte Empfang dieser Quittungsmeldung bewirkt den Abbruch der Quittungszeitüberwachung QÜZ. Der Rechner R1 weiß nun, daß er mit dem Rechner R2 nurmehr einkanalig und zwar über den Kanal K1 mittels höherredundant gesicherter Datentelegramme verkehren kann, er speichert eine entsprechnede Information ab. Auch der Rechner R2 weiß, daß er mit dem Rechner R1 nur über den Kanal K1 mittels höherredundant gesicherter Datentelegramme verkehren kann.

Diese Beschränkung im Datenverkehr ist in der Zeichnung für jeden der beiden Rechner durch die Schraffur des Feldes zwischen den beiden Kanälen verdeutlicht; der tatsächlich gestörte Kanal ist durch Striche gekennzeichnet.

Um zu verhindern, daß mit dem Ablauf der für die einkanalige höherredundant gesicherte Datenübertragung höchstzulässigen Zeitspanne die Sicherheitsabschaltung des gestörten Rechners und der mit ihm zusammenwirkenden Rechner veranlaßt wird, und um ferner zu verhindern, daß die Rechner nach dem Wechsel in die einkanalige Betriebsweise diese Betriebsweise fortführen auch wenn die Gründe für die detektierte Störung gar nicht mehr vorliegen sind den einzelnen Rechnern nach der vorliegenden Erfindung individuelle Zeitüberwacher zugeordnet, die beim Erkennen einer Übertragungsstörung gestartet werden und nach Ablauf der begrenzten maximalen Zeitspanne für die Zulässigkeit der einkanaligen Betriebsweise den zugehörigen Rechner sicher abschalten. Diese Zeitüberwacher sind durch noch zu erläuternde Maßnahmen einzeln und unabhängig voneinander wieder in die Grundstellung zu bringen, wodurch eine für die Zukunft drohende Zwangsabschaltung des zugehörigen Rechners wieder aufgeschoben wird. In der Zeichnung sind die Zeiten, in denen die den Rechnern R1 und R2 zugeordneten Zeitüberwacher Z1 und Z2 laufen, durch kreuzschraffierte Balken gekennzeichnet.

Um nun den Zeitüberwacher eines durch eine Störung zwar betroffenen, aber tatsächlich nicht gestörten Rechners möglichst umgehend wieder zurückzustellen, ist vorgesehen, daß die Rechner des Mehrrechnersystemes unabhängig von dem sonstigen Datenverkehr über beide Kanäle Prüfdaten austauschen, die der Lokalisierung der Störung dienen.

Diese Prüfdaten dienen darüber hinaus auch der regelmäßigen Prüfung der bei nicht höherredundant gesicherter Datenübertragung nicht beanspruchten Teile der Sende- und Empfangsspeicher des Übertragungssystems; aus diesem Grund findet dieser Datenaustausch ständig, also auch bei nicht gestörter Datenübertragung statt. Kommt von einem der durch eine Störung betroffenen Rechner eine zweikanalige Prüfdatenübertragung zu mindestens einem der übrigen Rechner des Mehrrechnersystemes zustande, so ist dies ein Beleg dafür, daß die eingetretene Störung nicht bei dem betreffenden Senderechner, sondern bei dem jeweiligen Partnerrechner zu suchen ist, mit dem er einkanalig mittels höherredundant gesicherter Datentelegramme verkehrt; die Störung kann sich dabei auf den Übertragungsweg zwischen diesen Rechnern oder auf die Rechnerperipherie zum Übertragungsweg beziehen. Der vorsorglich eingestellte Zeitüberwacher des tatsächlich nicht gestörten Rechners R1 ist dann zurückzustellen.

In dem dargestellten Ausführungsbeispiel ist angenommen, daß die eingetretene Störung mit dem Ablauf der Telegrammüberwachungszeit TÜZ bzw. mit dem Empfang der Quittungsmeldung Q1 (el) durch den Rechner R1 erkannt wurde und dabei zum Aktivieren der Zeitüberwacher Z1 und Z2 bei den an der Datenübertragung und Quittung beteiligten Rechnern R1 und R2 geführt hat; Zu einem beliebigen Zeitpunkt nach dem Erkennen einer Störung versucht der Rechner R2 zweikanalig Prüfdaten P1.1 und P1.2 an den Rechner R3 oder einen beliebigen anderen Rechner des Rechnersystemes zu übertragen. Wegen des angenommenen Fehlers in den Ein/Ausgabebaugruppen des Rechners R2 wird dabei das über den Kanal K2 an den Rechner R3 übertragene Prüfdatum dort entweder gar nicht oder verfälscht empfangen, so daß es verschieden ist von dem über den anderen Kanal empfangenen Prüfdatum. Der Rechner R3 unterläßt daraufhin die an sich vorgesehene Quittierung für den ordnungsgerechten Empfang der Prüfdaten an den Rechner R2. Die im Rechner R2 mit der Ausgabe der Prüfdaten P1.1 und P1.2 gestartete Quittungsüberwachungszeit QÜZ läuft ergebnislos ab; der Zeitüberwacher Z2 bleibt aktiv.

Zu einem späteren Zeitpunkt veranlaßt auch der Rechner R1 das Ausgeben von Prüfdaten P2.1 und P2.2 an den Rechner R3 oder irgendeinen anderen Rechner des Rechnersystems. Diese Prüfdaten sollen vom Rechner R3 ordnungsgerecht empfangen werden. Mit der Feststellung der Übereinstimmung der Prüfdaten wird die Telegrammzeitüberwachung TÜZ im Rechner R3 abgebrochen und die zweikanalige Ausgabe von Quittungsmeldungen Q2.1 und Q2.2 an den Rechner R1 veranlaßt. Wenn diese Quittungsmeldungen innerhalb der bei der Ausgabe der Prüfdaten gestarteten Quittungsüberwachungszeit QÜZ beim Rechner eintreffen, ist dies ein Beleg dafür, daß eine zweikanalige Datenübertragung vom Rechner R1 zum Rechner R3 stattgefunden hat. Hieraus folgt, daß die vorher im Verkehr mit dem Rechner R2 erkannte Störung nicht bei dem Rechner R1 zu suchen ist, sondern beim Rechner R2. Damit kann der vorsorglich für den Rechner R1 eingestellte Zeitüberwacher Z1 für die spätere Zwangsabschaltung des Rechners R1 wieder stillgesetzt werden. Entsprechendes gilt für alle anderen Rechner, deren Zeitüberwacher beim Übertragen von Datentelegrammen vom bzw. zum Rechner R2 aktiviert werden. Die Rechner verkehren untereinander fortan wieder zweikanalig mittels nicht höherredundant gesicherter Datentelegramme mit Ausnahme des tatsächlich gestörten Rechners, an den die Daten einkanalig in höherredundant gesicherter Form übertragen werden.

## Patentansprüche

1. Verfahren zum Betrieb eines signaltechnisch sicheren Mehrrechnersystemes mit mindestens zwei Rechnern, die über zwei voneinander unabhängige Kanäle kommunizieren und dabei über beide Kanäle Telegrammpaare mit inhaltsgleichen Datentelegrammen vom jeweiligen Senderechner zum jeweiligen Empfangsrechner übertragen, der die übermittelten Datentelegramme auf Übereinstimmung prüft, bei fehlender Übereinstimmung den jeweils gestörten Kanal lokalisiert und den Datenverkehr mindestens mit dem Senderechner, von dem die gestörten Daten stammen, für eine begrenzte maximale Zeitspanne über den noch verbleibenden ungestörten Kanal einkanalig mit höherredundant gesicherten Datentelegramm betreibt, **dadurch gekennzeichnet,** daß die Rechner (R1 bis R3) des Mehrrechnersystemes untereinander über beide Kanäle (K1, K2) Prüfdaten (P1.1, P1.2; P2.1, P2.2) zum Erkennen eines fehlerhaften Übertragungskanals austauschen, daß die an der Übertragung jeweils beteiligten Rechner (R1, R2) beim Erkennen eines fehlerhaften Übertragungskanals das Starten individueller Zeitüberwacher (Z1, Z2) veranlassen, welche den zugehörigen Rechner bei Ablauf der begrenzten maximalen Zeitspanne sicher abschalten, daß diese Zeitüberwacher (Z1) rückstellbar sind beim Zustandekommen einer zweikanaligen Prüfdatenübertragung zwischen dem jeweiligen Rechner (R1) und mindestens einem (R3) der übrigen Rechner des Mehrrechnersystemes und daß der zugheörige Rechner (R1) mit dem Zurückstellen seines Zeitüberwachers (Z1) wieder in den Betriebszustand mit zweikanaliger nicht höherredundant gesicherter Datenübertragung wechselt.

2. Verfahren nach Anspruch 1, **dadurch gekennzeichnet,** daß das Einstellen eines Zeitüberwachers (Z1,Z2) abhängig gemacht ist vom Übergang aus der zweikanaligen nicht höherredundant gesicherten Datenübertragung auf die einkanalige höherredundant gesicherte Datenübertragung.

3. Verfahren nach Anspruch 1, **dadurch gekennzeichnet,** daß das Rückstellen eines Zeitüberwachers (Z1) abhängig gemacht ist vom ordnungsgerechten zweikanaligen Empfang von durch mindestens einen Rechner (R3) des Mehrrechnersystemes beim ordnungsgerechten zweikanaligen Empfang von Prüfdaten (P2.1, P2.2) ausgegebenen Quittungsmeldungen (Q2.1, Q2.2).

4. Verfahren nach Anspruch 1, **dadurch gekennzeichnet,** daß jedem Rechner Speicher zum Kennzeichnen derjenigen Rechner des Mehrrechnersystems zugeordnet sind, zu oder von denen Daten auf Grund einer festgestellten Störung ausschließlich einkanalig höherredundant zu übertragen sind.

5. Verfahren nach Anspruch 4, **dadurch gekennzeichnet,** daß die Speicher zum Kennzeichnen desjenigen Kanals eingerichtet sind, über den die höherredundant gesicherten Daten zu übertragen sind.

## Claims

1. Process for operating a fail-safe multicomputer system having at least two computers which communicate via two mutually independent channels and which transmit thereby via both channels telegram pairs having content-identical data telegrams from the respective transmitting computer to the respective receiving computer, which checks that the data telegrams transferred match, locates the respective disturbed channel if they do not match, and conducts the data traffic with higher-redundancy protected data telegrams on one channel at least with the transmitting computer from which the corrupted data originate via the remaining undisturbed channel for a limited maximum period of time, characterized in that the computers (R1 to R3) of the multicomputer system exchange check data (P1.1, P1.2; P2.1, P2.2) with one another via both channels (K1, K2) for the detection of a disturbed transmission channel, in that if they detect a disturbed transmission channel, the respective computers (R1, R2) participating in the transmission initiate the starting of individual timers (Z1, Z2) which reliably switch off the associated computer upon expiry of the limited maximum period of time, in that said timers (Z1) can be reset upon the establishment of a check data transmission on two channels between the respective computer (R1) and at least one (R3) of the other computers of the multicomputer system, and in that when its timer (Z1) is reset, the associated computer (R1) switches back to the operating mode with non-higher-redundancy protected data transmission on two channels.

2. Process according to Claim 1, characterized in that the setting of a timer (Z1, Z2) is made dependent on the switch from the non-higher-redundancy protected data transmission on two channels to the higher-redundancy protected data transmission on one channel.

3. Process according to Claim 1, characterized in that the resetting of a timer (Z1) is made dependent on the correct reception on two channels of acknowledgement messages (Q2.1, Q2.2) output by at least one computer (R3) of the multicomputer system given the correct reception of check data (P2.1, P2.2) on two channels.

4. Process according to Claim 1, characterized in that memories are assigned to each computer for identifying the particular computer of the multicomputer system to or from which data are to be transmitted only on one channel with higher-redundancy as a result of a disturbance being detected.

5. Process according to Claim 4, characterized in that the memories are set up to identify the particular channel via which the higher-redundancy protected data are to be transmitted.

## Revendications

1. Procédé pour faire fonctionner un système à calculateurs multiples, qui est sûr du point de vue de la technique de transmission des signaux et comporte au moins deux calculateurs qui communiquent par l'intermédiaire de deux canaux indépendants et transmettent, par l'intermédiaire des deux canaux, des couples de télégrammes comprenant des télégrammes de données ayant des contenus identiques, depuis le calculateur respectif d'émission au calculateur respectif de réception qui contrôle les télégrammes de données retransmis pour voir s'ils coïncident, qui localise, en cas de non coïncidence, le canal perturbé et qui exécute le trafic des données au moins avec le calculateur d'émission, d'où proviennent les données perturbées, pendant un intervalle de temps maximum limité, sur un canal, par l'intermédiaire du canal non perturbé subsistant, avec un télégramme de données protégé au moyen d'une redondance accrue, caractérisé par le fait que les calculateurs (R1 à R3) du système à calculateurs multiples échangent entre eux, par l'intermédiaire des deux canaux (K1,K2), des données de contrôle (P1.1,P1.2; P2.1,P2.2), pour l'identification d'un canal de transmission défectueux, que les calculateurs (R1, R2) participant respectivement à la transmission déclenchent, lors de l'identification d'un canal de transmission défectueux, le démarrage de dispositifs individuels de contrôle de temps (Z1,Z2), qui débranchent de façon sûre le calculateur associé au bout de l'écoulement de l'intervalle de temps maximum limité, que ces dispositifs de contrôle de temps (Z1) peuvent être ramenés à zéro lorsque s'effectue une transmission de données de contrôle dans deux canaux entre le calculateur respectif (R1) et au moins l'un (R3) des autres calculateurs du système à calculateurs multiples, et que lors de la remise à zéro du dispositif de contrôle de temps (Z1) du calculateur associé (R1), l'état de transmission de ce dernier change à nouveau en passant à la transmission de données non protégées au moyen d'une redondance accrue, dans deux canaux.

2. Procédé selon la revendication 1, caractérisé en ce que le réglage d'un dispositif de contrôle de temps (Z1,Z2) est rendu dépendant de la commutation depuis la transmission de données, à deux canaux, non protégée au moyen d'une redondance accrue, à la transmission de données à un canal, protégée au moyen d'une redondance accrue.

3. Procédé suivant la revendication 1, caractérisé par le fait que la remise à zéro d'un dispositif de contrôle de temps (Z1) est rendue dépendante de la réception correcte, dans deux canaux de signalisation, d'accusés de réception (Q2.1, Q2.2), délivrés par au moins un calculateur (R3) du système à calculateurs multiples lors de la réception correcte, dans deux canaux, de données de contrôle (P2.1,P2.2).

4. Procédé suivant la revendication 1, caractérisé par le fait qu'à chaque calculateur sont associées des mémoires servant à caractériser les calculateurs du système à calculateurs multiples, en direction ou à partir desquelles des données doivent être transmises exclusivement dans un canal et avec une redondance accrue, en raison d'une perturbation détectée.

5. Procédé suivant la revendication 4, caractérisé par le fait que les mémoires sont agencées de manière à désigner le canal, au moyen duquel les données protégées au moyen d'une redondance accrue doivent être transmises.
